# EUROPÄISCHE PATENTSCHRIFT

(11) **EP 2 802 049 B1**
(45) Veröffentlichungstag und Bekanntmachung des Hinweises auf die Patenterteilung: **09.09.2015**
(21) Anmeldenummer: 14166646.1
(22) Anmeldetag: 30.04.2014
(51) Int. Cl.: H02G 3/08, A62C 2/06

(54) **Installationsbox**
Installation box
Boîtier d'installation

(30) Priorität: 06.05.2013 DE 202013101957 U
(43) Veröffentlichungstag der Anmeldung: 12.11.2014
(73) Patentinhaber: OBO Bettermann GmbH & Co. KG, 58710 Menden (DE)
(72) Erfinder: Ring, Stefan, 59192 Bergkamen (DE); Kutschelis, Kevin, 58638 Iserlohn (DE)
(74) Vertreter: Haverkamp, Jens

(56) Entgegenhaltungen:
- EP-A2- 2 030 652
- US-A- 4 477 694
- US-B1- 7 348 484

## Beschreibung

Die Erfindung betrifft eine Installationsbox, einzusetzen in einen Wand-, Decken- oder Bodendurchbruch, zum Durchleiten einer Installation und zur Bereitstellung eines im Brandfalle selbsttätig die Brandseite abschottenden Verschlusskörpers, umfassend zwei Seitenteile und wenigstens ein die Seitenteile verbindendes Deckel- oder Bodenteil, von welchen Teilen zumindest eines an seiner in die Installationsbox weisenden Seite wenigstens einen Formkörper aus einem Intumeszenzmaterial trägt.

Derartige Installationsboxen werden als Brandschutzelemente eingesetzt, um im Falle eines Brandes die Brandseite der Durchbrechung, in die die Installationsbox eingesetzt ist, von der anderen Seite zur Unterbindung einer Brandausbreitung durch die Durchbrechung hindurch abzuschotten. Eingesetzt werden derartige Installationsboxen vor allem bei solchen Installationsdurchbrüchen durch eine Wand, Decke oder einen Boden eines Gebäudes, die prinzipiell für eine Um- oder Nachrüstung zugänglich sein sollen, und um solche Installationen, die selbst brennbar sind. Letzteres ist beispielsweise bei elektrischen Kabeln der Fall. Eingesetzt werden vor allem bei größeren Gebäuden derartige, den Brandschutzanforderungen genügende Kabelboxen anstelle einer direkten Durchleitung der Kabel durch beispielsweise eine Wand, damit die Möglichkeit einer Nach- oder auch Uminstallation von verlegten Kabeln problemlos möglich ist.

Die EP2030652 offenbart eine Installationsbox nach dem Oberbegriff des Anspruchs 1.

Eine vorbekannte derartige Installationsbox besteht aus einem vorgefertigten Gehäuse, welches in der abzuschottenden Durchbrechung angeordnet und in aller Regel mit mineralischem Bindemittel an die Wand angeschlossen wird. Das Gehäuse trägt an seinen Innenseiten Platten aus einem Intumeszenzmaterial. Dieses schäumt bei entsprechender Temperatureinwirkung unter Vergrößerung seines Volumens um ein Vielfaches auf. Dieses Material ist nicht brennbar. Im Brandfall erfolgt somit die einen Flammenübergriff behindernde Abschottung selbsttätig. Typischerweise sind zur Bereitstellung einer Rauchabdichtung nach einer Montage einer solchen Installationsbox in einem Durchbruch und nach dem Durchführen der zumindest einen Installation der verbleibende Hohlraum mittels eines Hartschaumkörpers oder durch entsprechende Blenden verschlossen. Je nach Größe der zu bestückenden Durchbrechung werden unterschiedlich große Installationsboxen bereitgestellt, aus denen der Installateur die größenmäßig passende auszuwählen hat. Diese können sich nicht nur hinsichtlich ihrer Größe, sondern auch hinsichtlich ihrer Querschnittsgeometrie unterscheiden. Bekannt sind auch Sonderformen einer solchen Installationsbox, bei der das Blechgehäuse den eigentlichen Durchleitungskanal nur dreiseitig einfasst. Derartige Installationsboxen werden verwendet, wenn sich der Durchbruch unmittelbar an die Oberseite des Bodens oder der Unterseite einer Decke angrenzend befindet.

Auch wenn mit derartigen Installationsboxen ein den Brandschutzanforderungen genügendes, im Brandfalle selbstschließendes Schott bereitgestellt ist, ist es bei den vorbekannten Systemen erforderlich, auf die herstellerseitig vorgegebenen Größen einer solchen Installationsbox zurückzugreifen. Eine Größenanpassung vor Ort auf der Baustelle in Bezug auf die Querschnittsgeometrie des Schottes ist nicht möglich. Zudem ist bei den vorbekannten Schottsystemen bei der Installation von Kabeln zu beachten, dass Kabeltragvorrichtungen passgenau vor der Installationsbox zu enden haben.

Ausgehend von diesem diskutierten Stand der Technik liegt der Erfindung daher die Aufgabe zugrunde, eine eingangs genannte, insbesondere als Kabelbox geeignete Installationsbox dergestalt weiterzubilden, dass eine Anpassung hinsichtlich der Querschnittsgeometrie der Installationsbox ohne Weiteres vor Ort auf der Baustelle erfolgen kann. Zudem soll sich diese Installationsbox auch dazu eignen, in Durchbrüche eingesetzt werden zu können, in denen die Installationsdurchleitung, insbesondere in Form von auf einer Kabeltragvorrichtung geführten Kabeln bereits installiert ist.

Gelöst wird diese Aufgabe erfindungsgemäß durch eine Installationsbox mit den Merkmalen des Oberbegriffs des Anspruchs 1, bei der die Installationsbox aus einzelnen Modulteilen zusammengesetzt ist und die Seitenteile als Modulteile zumindest ein erstes Steckverbindungsglied und das wenigstens eine Deckel- und/oder Bodenteil als weiteres Modulteil bzw. weitere Modulteile ein zu dem zumindest einen Steckverbindungsglied des jeweiligen Seitenteils komplementäres zweites Steckverbindungsglied tragen, wobei diese komplementären Steckverbindungsglieder an den miteinander in Eingriff gestellten Modulteilen dergestalt angeordnet sind, damit die mittels der Steckverbindungsglieder zusammengesetzten Modulteile der Installationsbox in Durchleitungsrichtung einer Installation formschlüssig miteinander verbunden sind, und dass zumindest eines der Modulteile an seiner in die Installationsbox weisenden Seite wenigstens einen zum Ausbilden einer Rauchsperre dienenden, elastischen Schaumkörper trägt.

Diese typischerweise als Kabelbox eingesetzte Installationsbox ist modular aufgebaut, wobei die einzelnen Modulteile zum Erstellen einer solchen Installationsbox mittels komplementärer Steckverbindungsglieder miteinander verbunden sind und ohne Weiteres vor Ort miteinander verbunden werden können. Dieses erfolgt in aller Regel werkzeuglos. Ein Zusammensetzen der Modulteile ist somit ohne Weiteres vor Ort möglich. Das Vorsehen von komplementären Steckverbindungsgliedern erlaubt die Ausbildung der einzelnen Modulteile derart, dass diese zur Vermeidung einer Fehlmontage eindeutig miteinander verbunden werden können. Insofern können die komplementären Steckverbindungsglieder zugleich eine Montagecodierung darstellen. Infolge der Modularität kann vor Ort auf einer Baustelle durch entsprechendes Zusammensetzen einzelner Modulteile eine an die baulichen Gegebenheiten der Durchbrechung angepasste Installationsbox zusammengesetzt werden. Aufgrund der Modularität und der in Eingriff zu stellenden komplementären Steckverbindungsglieder können die beiden Seitenteile einer solchen Installationsbox beispielsweise durch mehrere Deckel- und/oder Bodenteile verbunden werden, wenn eine breitere Installationsbox bereitgestellt werden soll. Je nach der Anzahl der eingesetzten Deckel- und/oder Bodenteile lässt sich eine unterschiedliche breite Installationsbox ausbilden. Gleiches gilt prinzipiell auch für die Seitenteile. Auch diesbezüglich können bei entsprechender Ausbildung der Seitenteile mehrere in vertikaler Richtung miteinander in Eingriff gestellt zu einer Installationsbox mit einer geringeren oder einer größeren Höhe zusammengesetzt werden.

Von besonderem Vorteil an dem modularen Aufbau einer solchen Installationsbox und der typischerweise erfolgenden Montage vor Ort ist, dass diese ohne Weiteres auch in solche Durchbrechungen eingesetzt werden kann, durch die bereits eine Installation geführt ist. Dabei ist es durchaus möglich, dass die Installationsbox ebenfalls zum Einfassen einer Kabeltragvorrichtung zusammengesetzt werden kann. Zu diesem Zweck sind die Steckverbindungsglieder derart komplementär zueinander ausgeführt bzw. angeordnet, dass die auf diese Weise miteinander verbundenen Modulteile in Durchleitungsrichtung der Installation durch die Installationsbox formschlüssig miteinander verbunden sind. Dieses erlaubt ein Zusammensetzen der zum Ausbilden einer solchen Installationsbox verwendeten Modulteile außerhalb der eigentlichen Durchbrechung, um diese sodann in die Durchbrechung hinein verschieben zu können, ohne dass die montierten Modulteile aufgrund dieser Bewegung wieder außer Eingriff gestellt werden oder eine diesbezügliche Gefahr bestünde.

Zumindest eines der Modulteile trägt an seiner in die Installationsbox weisenden Seite zumindest einen zum Ausbilden einer Rauchsperre dienenden, elastischen Schaumkörper. In dem Schaumkörper sind feuerresistente Zusätze und/oder Intumeszenzpartikel eingearbeitet.

Mit einem solchen modularen Installationsboxsystem können Installationsboxen ausgebildet werden, die durch die Verbindung der Modulteile ein ringförmiges Gehäuse bilden, beispielsweise eines mit einem rechteckförmigen Querschnitt, oder solche, bei denen die beiden Seitenteile nur deckel- oder bodenseitig miteinander verbunden sind.

Die modulare Konzeption dieser Installationsbox hat neben den vorgenannten Vorteilen einer Anpassung der Installationsbox an die baulichen und/oder installationsseitigen Gegebenheiten auch herstellerseitig den Vorteil, dass nicht eine Vielzahl hinsichtlich ihrer Größe und ihrer Geometrie unterschiedliche Installationsboxen hergestellt werden müssen, sondern dass sich dieses auf die Herstellung der diesbezüglich relativ wenigen Modulteile beschränkt. Entsprechend reduziert sind auch Lagerhaltungs- und Transportkosten.

Von besonderem Vorteil bei einer solchen Installationsbox ist, wenn als Kabelbox vorgesehen, dass durch die Montage vor Ort diese auch zum Einfassen einer eine Durchbrechung bereits durchgreifenden Kabeltragvorrichtung, wie bereits vorstehend skizziert, verwendet werden kann. Dabei ist in einem Ausführungsbeispiel vorgesehen, dass die Seitenteile an die Seitenholme einer solchen Kabeltragvorrichtung angeschlossen bzw. daran aufgehängt werden. Somit trägt bei einem solchen Anwendungsfall die Kabeltragvorrichtung auch die Kabelbox. Die in einem solchen Fall als Kabelbox eingesetzte Installationsbox braucht somit in Bezug auf die durch die Durchbrechung geführte Installation, typischerweise Kabel, keine nennenswerten Kräfte aufzunehmen. Diese werden über die Kabeltragvorrichtung aufgefangen. Zugleich bildet die Kabeltragvorrichtung bei einem solchen Anwendungsfall eine Führungsschiene, an der die außerhalb der Durchbrechung montierte Kabelbox in ihre in der Durchbrechung vorgesehene Position verschoben werden kann. Vorteilhaft ist bei einer solchen Verwendung auch der Einsatz eines elastischen Schaumkörpers als Teil der Kabelbox, mit der eine Rauchsperre bereitgestellt wird. Aufgrund der Elastizität des Schaumkörpers kann ein solches Verschieben zum Einbringen der Kabelbox in ihre bestimmungsgemäße Position innerhalb einer Wand-, Decken- oder Bodendurchbrechung auch dann vorgenommen werden, wenn die Installation in Verschieberichtung und somit in Durchleitungsrichtung eine gewissen Topografie aufweist, beispielsweise durch quer übereinander liegende Kabel, Verbinder oder dergleichen. Vorteilhaft bei dem Einsatz eines solchen Schaumkörpers ist auch, dass eine Rauchsperre bereitgestellt ist, bei der keinerlei Ausschnitte oder dergleichen vorgenommen werden müssen, damit diese in den verbleibenden Hohlraum in der Installationsbox einpasst.

Somit ist es bei einer solchen Kabelbox ohne Weiteres möglich, die Kabeltragvorrichtungen durch die Durchbrechungen hindurch zu führen und dennoch ein wirksames Brandschott auszubilden. Da die Kabelbox relativ zu der Kabeltragvorrichtung bewegt werden kann, hat die Durchführung der Kabeltragvorrichtung durch die Durchbrechung hindurch zudem den Vorteil, dass thermische Spannungen im Brandfalle nicht notwendigerweise zu einer Verwindung der Kabeltragvorrichtung führen. Derartige Spannungen können durch das Brandschott hindurch in die nicht brandbeaufschlagte Seite der Durchbrechung abgeleitet werden. Das Durchleiten der Kabeltragvorrichtung durch eine solche Durchbrechung ist vor allem dann sinnvoll, wenn die Kabeltragvorrichtung zusätzlich eine Schutzleiterfunktion oder eine Überspannungsschutzfunktion übernehmen soll. In einem solchen Fall brauchen im Unterschied zu vorbekannten Einrichtungen der in Rede stehenden Art keine zusätzlichen elektrischen Verbindungen zwischen den beiden Seiten einer Durchbrechung hergestellt zu werden.

In einem solchen Schaumkörper ist typischerweise ebenfalls Intumeszenzmaterial enthalten, so dass auch der Schaumkörper unter entsprechender Wärmebeaufschlagung bläht. Der an zumindest einem Modulteil angeordnete Schaumkörper kann ein einzelner Körper sein. Gemäß einer anderen Ausgestaltung setzt sich dieser aus mehreren in Durchleitungsrichtung der Installation parallel und nebeneinander zueinander angeordneten Lamellen zusammen. Derartige Lamellen können auch Teil eines Schaumstoffkörpers sein, die durch Einschnitte bereitgestellt sind. Typischerweise wird das Deckelteil den Schaumkörper tragen.

Um eine besonders effektive Brandabschottung zu gewährleisten, ist in einem Ausführungsbeispiel vorgesehen, dass sämtliche Modulteile innenseitig einen Intumeszenzformkörper, typischerweise als Platte ausgeführt, tragen. Zum Halten eines solchen Intumeszenzformkörpers an der Innenseite eines Modulteils dienen von dem Modulteil nach innen hin abragende Dorne oder Stecklaschen, auf die der Intumeszenzkörper aufgesteckt ist. Ein solches Modulteil kann über einen umlaufenden, den jeweiligen Intumeszenzformkörper einfassenden und aus der Ebene des jeweiligen Modulteils abgewinkelten Rand aufweisen. Hierdurch wird nicht nur eine Aufnahme für den typischerweise als Platte ausgebildeten Intumeszenzkörpers bereitgestellt. Zugleich erfolgt hierdurch eine Fokussierung des Blähvorganges in einem Brandfalle in die Installationsbox hinein.

Weitere Vorteile und Ausgestaltungen der beanspruchten Installationsbox ergeben sich aus der nachfolgenden Beschreibung anhand von Ausführungsbeispielen unter Bezugnahme auf die beigefügten Figuren. Es zeigen:
- **Fig. 1:**: eine perspektivische Ansicht der noch nicht miteinander verbundenen Modulteile einer Kabelbox,
- **Fig. 2:**: die aus den Modulteilen der Figur 1 zusammengesetzte Kabelbox,
- **Fig. 3:**: die Kabelbox der Figur 2 montiert an einer Kabeltragvorrichtung,
- **Fig. 4:**: zwei Deckelteile als Modulteile zum Erstellen einer Kabelbox gemäß einer anderen Ausgestaltung ihrer Steckverbindungsglieder und
- **Fig. 5:**: eine perspektivische Ansicht einer weiteren Kabelbox mit einer von dieser eingefassten Kabeltragvorrichtung.

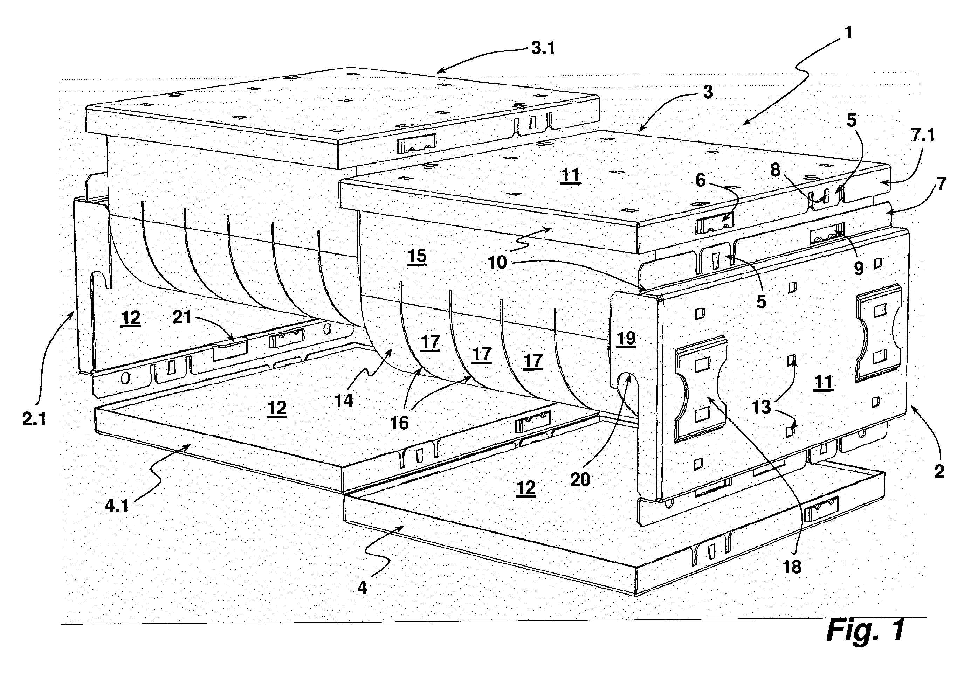

Eine als Kabelbox 1 ausgeführte Installationsbox dient, wenn in eine Wand-, Decken- oder Bodendurchbrechung eines Gebäudes eingesetzt, als Brandschott. Die in Figur 1 dargestellte Kabelbox 1 verfügt über zwei Seitenteile 2, 2.1, die oberseitig durch zwei Deckelteile 3, 3.1 und unterseitig durch zwei Bodenteile 4, 4.1 miteinander zur Ausbildung der Kabelbox 1 verbindbar sind. Die Seitenteile 2, 2.1, die Deckelteile 3, 3.1 sowie die Bodenteile 4, 4.1 bilden jeweils einzelne Modulteile. Zum Verbinden der Modulteile sind Steckverbindungsglieder vorgesehen, wobei jeweils ein erstes Modulteil zumindest ein erstes Steckverbindungsglied und das daran anzuschließende zweite Modulteil jeweils ein hierzu komplementäres Steckverbindungsglied trägt. Bei dem dargestellten Ausführungsbeispiel handelt es sich bei den komplementären Steckverbindungsgliedern um Stecklaschen 5 und komplementär hierzu um Laschenaufnahmen 6. Beispielhaft ist an dem oberen Randabschnitt des Seitenteils 2 eine Stecklasche mit dem Bezugszeichen 5 kenntlich gemacht. Das an dieses Seitenteil 2 anzuschließende Deckelteil 3 trägt die komplementäre Laschenaufnahme 6. Bei dem dargestellten Ausführungsbeispiel ist vorgesehen, dass jedes Modulteil an seinem mit einem weiteren Modulteil in Eingriff zu stellenden Randabschnitt zwei Steckverbindungsglieder trägt, und zwar jeweils eine Stecklasche 5 sowie eine mit Abstand hierzu angeordnete Laschenaufnahme 6. Die Stecklaschen 5 sowie die Laschenaufnahmen 6 sind integraler Bestandteil des jeweiligen Modulteils. Bei den Modulteilen handelt es sich um Stahlblechbauteile. Jedes Modulteil verfügt über einen Verbindungsflansch 7, 7.1, in den die Stecklaschen 5 durch entsprechend konturierte Ausschnitte eingebracht und die Laschenaufnahmen 6 entsprechend ausgeformt sind. Die Laschenaufnahmen 6 weisen eine Öffnungsweite auf, dass in diese eine Stecklasche 5 eingeführt werden kann. Bei dem dargestellten Ausführungsbeispiel verfügen die Stecklaschen 5 über ausgestellte Widerhaken 8, vorgesehen zum Eingreifen in die rückwärtige Öffnung 9 des Verbindungsflansches 7, aus dem die Laschenaufnahme 6 ausgestellt ist. Durch eine vertikal ausgeführte Montagebewegung ist das Deckelteil 3 mit dem Seitenteil 2 werkzeuglos verbindbar. Im Zuge dieser Montagebewegung werden die Stecklaschen 5 des jeweiligen Modulteils in die komplementären Laschenaufnahmen 6 des jeweilig anderen Modulteils eingeführt.

Die aus einem Stahlblech hergestellten Modulteile 2, 2.1, 3, 3.1, 4, 4.1 weisen jeweils einen aus der Ebene des jeweiligen Modulteils abgewinkelten umlaufenden Rand auf. Bei dem Deckelteil 3 bildet der Verbindungsflansch 7.1 eine Seite des umlaufenden Randes. Bei dem Seitenteil 2 ist der Verbindungsflansch 7 eine Abwinklung des oberen Teils des umlaufenden Randes. Dieser umlaufende Rand 10 bildet zusammen mit der Bodenplatte 11 (am Seitenteil 2 kenntlich gemacht) eine Aufnahme zur Aufnahme einer Intumeszenzplatte 12 (in den Modulteilen 2.1, 4, 4.1 kenntlich gemacht). Zum Halten der Intumeszenzplatte 12 der Innenseite der jeweiligen Bodenplatte 11 dienen nach innen von der jeweiligen Bodenplatte 11 ausgestellte Stecklaschen, auf die die jeweilige Intumeszenzplatte 12 aufgesteckt ist. In der Bodenplatte 11 des Seitenteils 2 sind die Einschnitte zum Ausbilden der nach innen abragenden Stecklaschen erkennbar und mit dem Bezugszeichen 13 kenntlich gemacht.

Die vorbeschriebene komplementäre Ausbildung der Verbindungsglieder 5, 6, wie dieses an der Verbindungsstelle zwischen dem Deckelteil 3 und dem Seitenteil 2 beschrieben ist, trägt jedes Modulteil 2, 3, 3.1, 4, 4.1 an seinen beiden Anschlussseiten. Dabei ist vorgesehen, dass in der Flucht eines jeweilig ersten Steckverbindungsgliedes, beispielsweise der Stecklasche 5 an dem Montageflansch 7 des Seitenteils 2 an der anderen Anschlussseite das komplementäre Steckverbindungsglied, hier: eine Laschenaufnahme angeordnet ist.

Zur Bereitstellung einer Rauchsperre ist auf die in den Deckelteilen 3, 3.1 eingesetzte Intumeszenzplatte jeweils noch ein Schaumkörper 14 aufgesetzt. Bei dem Schaumkörper 14 handelt es sich um einen solchen mit elastischen Eigenschaften. Auch der Schaumkörper 14 beinhaltet Intumeszenzmaterial und ist daher unter Temperatureinwirkung blähfähig. Der Schaumkörper 14 umfasst bei dem dargestellten Ausführungsbeispiel einen plattenartigen Abschnitt 15, an den mehrere, in Durchleitungsrichtung einer Installation durch die Kabelbox 1 durch Einschnitte 16 voneinander getrennte Lamellen 17 angeformt sind. Durch die Lamellen 17 ist die gesamte Breite der Kabelbox 1 ausgefüllt.

Die Seitenteile 2, 2.1 tragen an der Außenseite ihrer jeweiligen Bodenplatte 11 Montageanschlüsse 18, die ebenfalls nach Art einer Laschenaufnahme ausgestellt sind. Die Montageanschlüsse 18 können zur Aufnahme von Montagewinkeln dienen, mit denen die Kabelbox 1 an der beispielsweise eine Wanddurchbrechung einfassenden Wand festlegbar ist.

Bei dem dargestellten Ausführungsbeispiel ist an den Seitenteilen 2, 2.1 an dem aus der Ebene der Bodenplatte 11 abgewinkelten Randabschnitt ein Montageabschnitt 19 angeformt. Der Montageabschnitt 19 trägt eine Einhängekontur 20, um das Seitenteil 2 bzw. 2.1 an den Seitenholm einer Kabeltragvorrichtung anschließen zu können. Ein solcher Montageabschnitt mit einer Einhängekontur befindet sich an beiden Seiten jedes Seitenteils 2, 2.1. Mit der Einhängekontur 20 wirken zum Einfassen des Seitenholms einer Kabeltragvorrichtung nach innen sich erstreckende Bodenlaschen 21 zusammen. Die Bodenlaschen 21 sind vorgesehen, um unter den unteren Abschluss eines Seitenholms und damit unter den Boden einer Kabeltragvorrichtung greifen zu können.

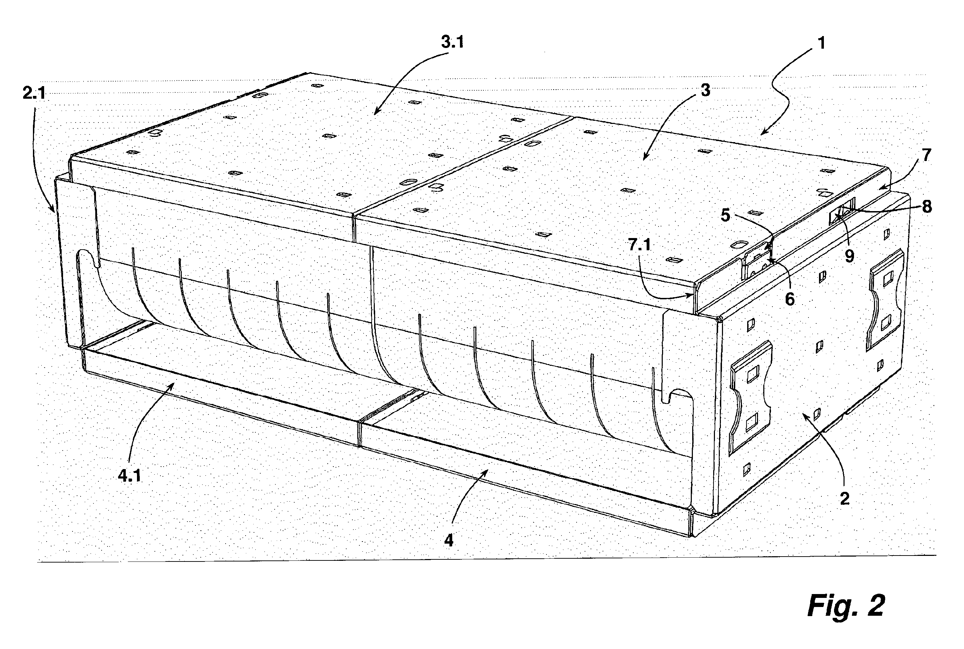

Figur 2 zeigt die aus den Modulteilen 2, 2.1, 3, 3.1, 4, 4.1 zusammengesetzte Kabelbox 1. Durch das Zusammenstecken der einzelnen Modulteile miteinander werden die jeweils komplementären Verbindungsflansche, wie beispielhaft an den Verbindungsflanschen 7, 7.1 in eine Anlage zueinander gebracht. An der Verbindung zwischen dem Seitenteil 2 und dem Deckelteil 3 ist deutlich erkennbar, dass die Stecklasche 5 des dem Seitenteil 2 zugehörigen Verbindungsflansches 7 in die Laschenaufnahme 6 des dem Deckelteil 3 zugehörigen Verbindungsflansches 7.1 eingeführt worden ist. Gleichermaßen ist die Stecklasche 5 des Deckelteils 3 in die komplementäre Laschenaufnahme 6 des Seitenteils 2 eingeführt worden. An letzterer Ineingriffstellung ist die Widerhakenfunktion der aus den Stecklaschen ausgestellten Widerhaken 8 erkennbar. Der Widerhaken 8 springt in die Öffnung 9 ein und wirkt gegen die Oberseite des die Öffnung 9 begrenzenden Randes. Somit ist eine Demontage verhindert. Es versteht sich, dass eine solche Verriegelung auch bei den anderen miteinander in Eingriff gestellten Stecklaschen 5 und Laschenaufnahmen 6 eintritt.

Die Tiefe des Durchbruches, in den die Kabelbox 1 eingesetzt wird, entspricht typischerweise der Tiefe der Kabelbox selbst. Dieses ist jedoch nicht notwendige Voraussetzung. Die Tiefe einer Durchbrechung kann auch größer sein als die Tiefe der Kabelbox.

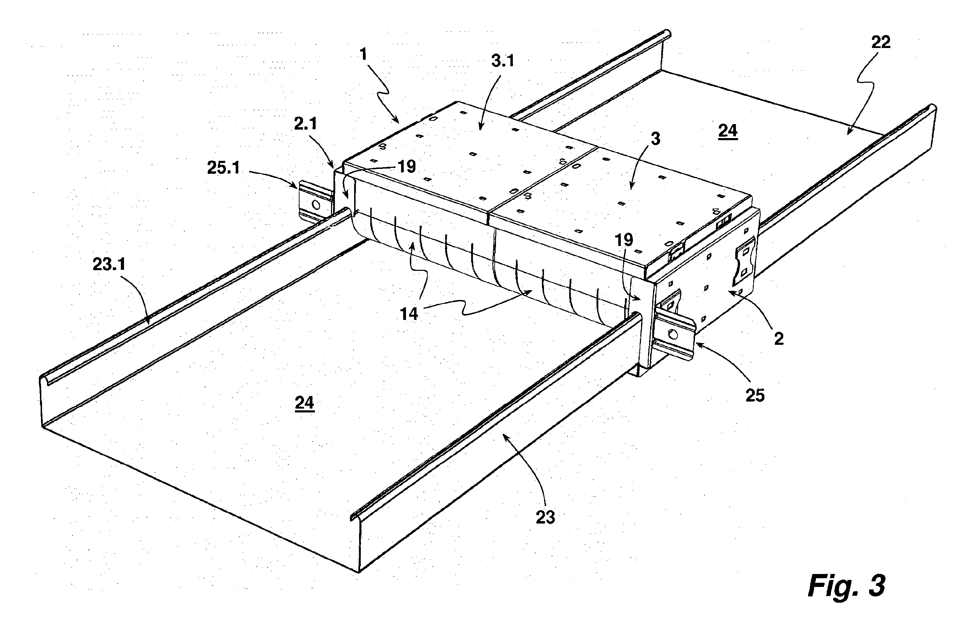

Figur 3 zeigt die Kabelbox 1, die an eine als Kabelrinne ausgebildete Kabeltragvorrichtung 22 angeschlossen ist. Die Montageabschnitte 19 der Seitenteile 2, 2.1 sind mit ihren Einhängekonturen 20 auf die Seitenholme 23, 23.1 aufgesetzt bzw. daran eingehängt. Die Unterseite des Bodens 24 der Kabeltragvorrichtung liegt auf den Bodenlaschen 21 der Seitenteile 2, 2.1 auf. Die Höhe der von den Deckelteilen 3, 3.1 getragenen Schaumkörper 14 ist so bemessen, dass sich diese auf der Oberseite des Bodens 24 der Kabeltragvorrichtung 22 mit einer gewissen Vorspannung abstützen. Hierdurch ist eine wirksame Rauchsperre auch dann gewährleistet, wenn in der Kabeltragvorrichtung 22 noch keine Installationen verlegt worden sind. Die Kabeltragvorrichtung 22 durchgreift die Kabelbox 1. Die Kabelbox 1 ist mithin an der Kabeltragvorrichtung verschiebbar, was typischerweise genutzt wird, um diese nach einer Montage um eine Kabeltragvorrichtung herum in die Durchbrechung einzuschieben, durch die die Kabeltragvorrichtung bereits durchgreift. Befindet sich die Kabelbox 1 innerhalb der Durchbrechung, kann diese wandseitig festgelegt werden. Zu diesem Zweck dienen in die Montageanschlüsse 18 der Seitenteile 2, 2.1 eingesetzte Befestigungswinkel 25, 25.1. Der verbleibende Hohlraum in der Durchbrechung wird mit einem geeigneten, typischerweise mineralischen Material verfüllt.

Es versteht sich, dass mit Kabelboxen, wie vorbeschrieben, auch Gruppenanordnungen realisiert werden können.

Die Beschreibung der Kabelbox 1 unter Bezugnahme auf die Figuren macht deutlich, dass aufgrund der modularen Ausgestaltung derselben es ohne Weiteres möglich ist, eine Kabelbox mit beispielsweise nur einem Deckelteil und einem Bodenteil oder auch mit mehr als zwei Deckel- und Bodenteilen zusammenzusetzen.

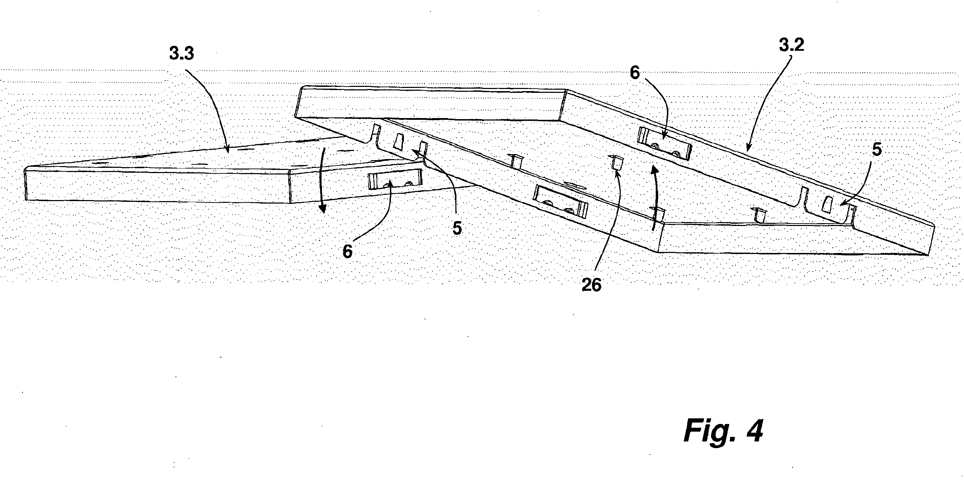

Figur 4 zeigt in einem weiteren Ausführungsbeispiel eine Ausgestaltung, bei der die komplementären Steckverbindungsglieder zweier zu verbindender Modulteile, hier: zweier Deckelteile 3.2, 3.3 gleichsinnig bezüglich ihrer Stecklaschen 5 orientiert sind. Bei dem Ausführungsbeispiel der Figuren 1 bis 3 sind die Stecklaschen zweier zu verbindender Modulteile, beispielsweise der Modulteile 2 und 3 gegensinnig zueinander orientiert. Dieses ermöglichte eine Montagebewegung, die ausschließlich translatorisch ausgeführt werden musste. Durch die gleichsinnige Anordnung der Steckerlaschen bei den Deckelteilen 3.2, 3.3 ist eine Steckmontagebewegung erforderlich, bei der die beiden Modulteile, hier: die Modulteile 3.2 und 3.3 unter Ausübung einer Drehbewegung um einige Winkelgrade, wie durch die Pfeile in Figur 4 angedeutet, zusammengesetzt werden. Auch hierbei handelt es sich um eine werkzeuglose Steckverbindung.

Das Deckelteil 3.2 ist in Figur 4 ohne eine darin eingesetzte Intumeszenzplatte gezeigt. Daher sind die aus der Bodenplatte nach innen ausgestellten Stecklaschen 26, an denen die Intumeszenzplatte gehalten ist, erkennbar.

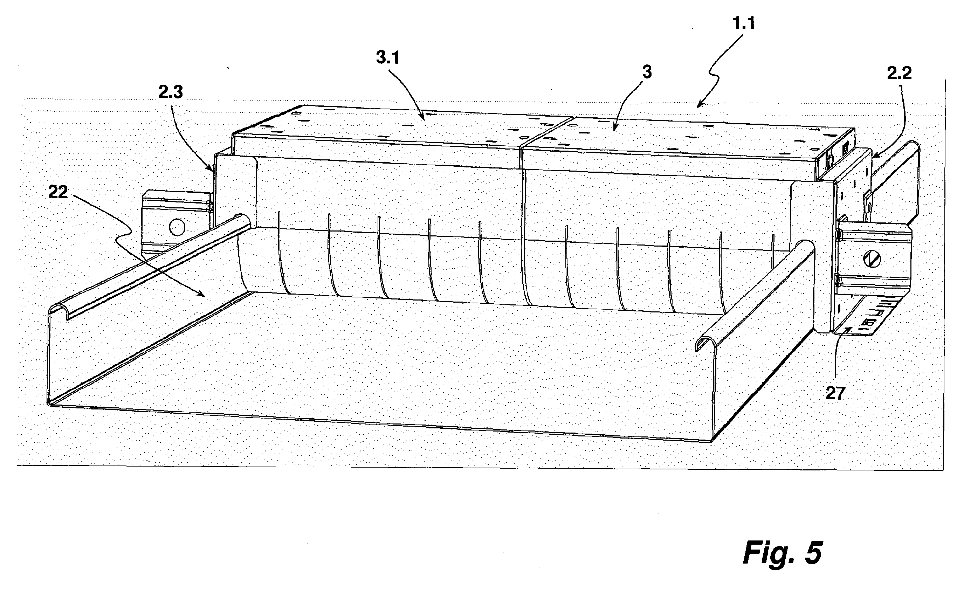

Figur 5 zeigt ein weiteres Ausführungsbeispiel einer Kabelbox 1.1. Bei der Kabelbox 1.1 sind die Seitenteile 2.2, 2.3 nur durch zwei Deckelteile verbunden. Hierbei handelt es sich um die bereits vorbeschriebenen Deckelteile 3, 3.1. Die Seitenteile 2.2, 2.3 sind ausgeführt, damit diese auf die Oberseite eines Bodens aufgestellt werden können. Zu diesem Zweck tragen diese an ihrem unteren Abschluss einen ausgestellten Montageschenkel 27. Auch die Kabelbox 1.1 eignet sich, wie aus Figur 5 erkennbar, an einer Kabeltragvorrichtung 22 montiert zu werden. Dieses erfolgt in derselben Weise, wie dieses zu der Kabelbox 1 beschrieben ist.

Die Erfindung ist anhand von Ausführungsbeispielen beschrieben worden. Die Erfindung lässt sich im Umfange der Ansprüche auch in anderer Weise ausführen. Daher ist der Offenbarungsgehalt dieser Ausführungen nicht auf die konkret beschriebenen Ausführungsbeispiele beschränkt.

### Bezugszeichenliste

- 1, 1.1: Kabelbox
- 2, 2.1, 2.2, 2.3: Seitenteil
- 3, 3.1, 3.2, 3.3: Deckelteil
- 4, 4.1: Bodenteil
- 5: Stecklasche
- 6: Laschenaufnahme
- 7, 7.1: Verbindungsflansch
- 8: Widerhaken
- 9: Öffnung
- 10: Rand
- 11: Bodenplatte
- 12: Intumeszenzplatte
- 13: Einschnitt
- 14: Schaumkörper
- 15: Abschnitt
- 16: Einschnitt
- 17: Lamelle
- 18: Montageanschluss
- 19: Montageabschnitt
- 20: Einhängekontur
- 21: Bodenlasche
- 22: Kabeltragvorrichtung
- 23, 23.1: Seitenholm
- 24: Boden
- 25, 25.1: Befestigungswinkel
- 26: Stecklasche
- 27: Montageschenkel

## Patentansprüche

1. Installationsbox, einzusetzen in einen Wand-, Decken- oder Bodendurchbruch, zum Durchleiten einer Installation und zur Bereitstellung eines im Brandfalle selbsttätig die Brandseite abschottenden Verschlusskörpers, umfassend zwei Seitenteile (2, 2.1, 2.2, 2.3) und wenigstens ein die Seitenteile (2, 2.1, 2.2, 2.3) verbindendes Deckel- oder Bodenteil (3, 3.1, 3.2, 3.3; 4, 4.1), von welchen Teilen (2, 2.1, 2.2, 2.3, 3, 3.1, 3.2, 3.3, 4, 4.1) zumindest eines an seiner in die Installationsbox weisenden Seite wenigstens einen Formkörper (12) aus einem Intumeszenzmaterial trägt, **dadurch gekennzeichnet, dass** die Installationsbox (1, 1.1) aus einzelnen Modulteilen (2, 2.1, 2.2, 2.3, 3, 3.1, 3.2, 3.3, 4, 4.1) zusammengesetzt ist und die Seitenteile (2, 2.1, 2.2, 2.3) als Modulteile zumindest ein erstes Steckverbindungsglied (5, 6) und das wenigstens eine Deckel- und/oder Bodenteil (3, 3.1, 3.2, 3.3; 4, 4.1) als weiteres Modulteil bzw. weitere Modulteile ein zu dem zumindest einen Steckverbindungsglied (5, 6) des jeweiligen Seitenteils (2, 2.1, 2.2, 2.3) komplementäres zweites Steckverbindungsglied (6, 5) tragen, wobei diese komplementären Steckverbindungsglieder (5, 6) an den miteinander in Eingriff gestellten Modulteilen dergestalt angeordnet sind, damit die mittels der Steckverbindungsglieder (5, 6) zusammengesetzten Modulteile der Installationsbox (1, 1.1) in Durchleitungsrichtung einer Installation formschlüssig miteinander verbunden sind, und dass zumindest eines der Modulteile (2, 2.1, 2.2, 2.3, 3, 3.1, 3.2, 3.3, 4, 4.1) an seiner in die Installationsbox (1, 1.1) weisenden Seite wenigstens einen zum Ausbilden einer Rauchsperre dienenden, elastischen Schaumkörper (14) trägt.

2. Installationsbox nach Anspruch 1, **dadurch gekennzeichnet, dass** die Seitenteile (2, 2.1, 2.2, 2.3) an ihren Enden jeweils einen gegenüber ihrer flächigen Erstreckung nach innen abgewinkelten Montageabschnitt (19) mit einer Kontur zum Einhängen des Seitenteils (2, 2.1, 2.2, 2.3) an den Seitenholm (23, 23.1) einer Kabeltragvorrichtung (22) aufweisen.

3. Installationsbox nach Anspruch 2, **dadurch gekennzeichnet, dass** die Seitenteile (2, 2.1, 2.2, 2.3) einen oder mehrere, nach innen ausgestellte und mit vertikalem Abstand zu der oder den Einhängekonturen (20) angeordnete Bodenlaschen (21) aufweisen, die zusammen mit der Einhängekontur (20) eine Aufnahme zum ober- oder unterseitigen Einfassen eines Seitenholms (23, 23.1) einer Kabeltragvorrichtung (22) bilden.

4. Installationsbox nach einem der Ansprüche 1 bis 3, **dadurch gekennzeichnet, dass** die Modulteile (2, 2.1, 2.2, 2.3, 3, 3.1, 3.2, 3.3, 4, 4.1) der Installationsbox (1, 1.1) jeweils einen umlaufenden, den jeweiligen Intumeszenzformkörper (12) einfassenden, aus der Ebene des jeweiligen Modulteils (2, 2.1, 2.2, 2.3, 3, 3.1, 3.2, 3.3, 4, 4.1) abgewinkelten Rand (10) aufweisen.

5. Installationsbox nach einem der Ansprüche 1 bis 4, **dadurch gekennzeichnet, dass** es sich bei den komplementären Steckverbindungsgliedern um Stecklaschen (5) und komplementär hierzu ausgebildete Laschenaufnahmen (6) handelt.

6. Installationsbox nach Anspruch 5, **dadurch gekennzeichnet, dass** die Steckverbindungsglieder (5, 6) Teil eines sich in vertikaler Richtung erstreckenden Randes (10) des jeweiligen Modulteils (2, 2.1, 2.2, 2.3, 3, 3.1, 3.2, 3.3, 4, 4.1) sind.

7. Installationsbox nach einem der Ansprüche1 bis 6, **dadurch gekennzeichnet, dass** jedes Modulteil (2, 2.1, 2.2, 2.3, 3, 3.1, 3.2, 3.3, 4, 4.1) an den mit einem weiteren Modulteil (2, 2.1, 2.2, 2.3, 3, 3.1, 3.2, 3.3, 4, 4.1) zu verbindenden Abschnitt (7, 7.1) zwei in Durchleitungsrichtung der Installation mit Abstand zueinander angeordnete Steckverbindungsglieder (5, 6), insbesondere jeweils eines der beiden komplementär zueinander ausgebildeten Verbindungsglieder trägt.

8. Installationsbox nach einem der Ansprüche 1 bis 7, **dadurch gekennzeichnet, dass** die Installationsbox (1, 1.1) zwei Seitenteile (2, 2.1, 2.2, 2.3) und ein aus mehreren, in Querrichtung zur Durchleitungsrichtung der Installation miteinander mittels der Steckverbindungsglieder verbundene Deckel- und/oder Bodenteile (3, 3.1; 4, 4.1) aufweist.

9. Installationsbox nach einem der Ansprüche 1 bis 8, **dadurch gekennzeichnet, dass** die Installationsbox (1) zwei Seitenteile (2, 2.1) aufweist, die durch zumindest ein Deckelteil (3, 3.1) sowie durch zumindest ein Bodenteil (4, 4.1) miteinander verbunden sind.

10. Installationsbox nach einem der Ansprüche 1 bis 9, **dadurch gekennzeichnet, dass** das zumindest eine Deckelteil (3, 3.1) den Schaumkörper (14) trägt.

11. Installationsbox nach Anspruch 10, **dadurch gekennzeichnet, dass** der Schaumkörper (14) ausgeführt ist, damit sich dieser unter einer gewissen Vorspannung stehend auf dem eine Installation tragenden Boden (24), etwa dem Boden einer Kabeltragvorrichtung (22) abstützt.

12. Installationsbox nach einem der Ansprüche 1 bis 11, **dadurch gekennzeichnet, dass** es sich bei der Installationsbox um eine Kabelbox (1, 1.1) zum Durchleiten von elektrischen Kabeln durch einen Wand-, Decken- oder Bodendurchbruch handelt.

## Claims

1. An installation box to be set into a wall, ceiling or floor opening for feeding through an installation and for providing a sealing body, which in the event of fire. isolates the fire side comprising two side parts (2, 2.1, 2.2, 2.3) and at least one cover part or base part (3, 3.1, 3.2, 3.3; 4, 4.1) which interconnects the side parts (2, 2.1, 2.2, 2.3), of which parts (2, 2.1, 2.2, 2.3, 3, 3.1, 3.2, 3.3, 4, 4.1) at least one carries, on its side facing into the installation box, at least one moulding (12) made of an intumescent material, **characterised in that** the installation box (1, 1.1) is made up of individual module parts (2, 2.1, 2.2, 2.3, 3, 3.1, 3.2, 3.3, 4, 4.1) and the side parts (2, 2.1, 2.2, 2.3) as module parts carry at least one first connecting member (5, 6) and the at least one cover part and/or base part (3, 3.1, 3.2, 3.3; 4, 4.1) as a further module part or further module parts carry a second connecting member (6, 5) which is complementary to the at least one connecting member (5, 6) of the respective side part (2, 2.1, 2.2, 2.3), with these complementary connecting members (5, 6) being arranged on the mutually engaged module parts so that the module parts of the installation box (1, 1.1) assembled by way of the connecting members (5, 6) are positively interlocked in the lead-through direction of an installation, and that at least one of the module parts (2, 2.1, 2.2, 2.3, 3, 3.1, 3.2, 3.3, 4, 4.1) carries, on its side facing into the installation box (1, 1.1), at least one elastic foam body (14) used for forming a smoke barrier.

2. The installation box of claim 1 **characterised in that** the side parts (2, 2.1, 2.2, 2.3) each comprise at their ends a mounting section (19) which is angled inwards relative to their flat extension and which has a contour for mounting the side part (2, 2.1, 2.2, 2.3) to the side rail (23, 23.1) of a cable tray (22).

3. The installation box of claim 2 **characterised in that** the side parts (2, 2.1, 2.2, 2.3) comprise one or a plurality of base lugs (21) which are angled inwards and arranged at a vertical distance away from the mounting contour(s) (20) and which in conjunction with the mounting contour (20) form a mount for receiving the upper side or lower side of a side rail (23, 23.1) of a cable tray (22).

4. The installation box of any one of claims 1 to 3 **characterised in that** the module parts (2, 2.1, 2.2, 2.3, 3, 3.1, 3.2, 3.3, 4, 4.1) of the installation box (1, 1.1) each comprise a continuous upstand (10) enclosing the respective intumescent moulding (12) and angled away from the plane of the respective module part (2, 2.1, 2.2, 2.3, 3,3.1,3.2,3.3,4,4.1).

5. The installation box of any one of claims 1 to 4 **characterised in that** the complementary connecting members are lugs (5) and lug openings (6) that are configured complementarily to said lugs (5).

6. The installation box of claim 5 **characterised in that** the connecting members (5, 6) are part of a vertically extending upstand(10) of the respective module part (2, 2.1, 2.2,2.3, 3, 3.1, 3.2, 3.3, 4, 4.1).

7. The Installation box of any one of claims 1 to 6 **characterised in that** ,on the section (7, 7.1) that is to be connected to a further module part (2, 2.1, 2.2, 2.3, 3, 3.1, 3.2, 3.3, 4, 4.1),each module part (2, 2.1, 2.2, 2.3, 3, 3.1, 3.2, 3.3, 4, 4.1) carries two connecting members (5, 6) arranged apart from one another in the lead-through direction of the installation, and more particularly one each of the two connecting members that are configured complementarily to one another.

8. The installation box of any one of claims 1 to 7 **characterised in that** the installation box (1, 1.1) comprises two side parts (2, 2.1, 2.2, 2.3) and a plurality of cover parts and/or base parts (3, 3.1; 4, 4.1) interconnected in the direction at right angles to the lead-through direction of the installation by way of the connecting members.

9. The installation box of any one of claims 1 to 8 **characterised in that** the installation box (1) comprises two side parts (2, 2.1) interconnected by at leastone cover part (3, 3.1) and by at least one base part (4, 4.1).

10. The installation box of any one of claims 1 to 9 **characterised in that** the at least one cover part (3, 3.1) carries the foam body (14).

11. The installation box of claim 10 **characterised in that** the foam body (14) is executed so that it is supported undera certain preload standing on the base (24) carrying an installation, such as the base of a cable tray (22).

12. The installation box of any one of claims 1 to 11 **characterised in that** the installation box is a cable box (1, 1.1) for leading electric cables through a penetration in a wall, a ceiling or a floor.

## Revendications

1. Boîtier d'installation, à mettre en place dans l'ouverture d'un mur, d'un plafond ou d'une dalle, afin de faire passer une installation électrique et pour mettre à disposition un corps de verrouillage qui, en cas d'incendie, permet réaliser de façon autonome un cloisonnement par rapport au côté en feu, comprenant deux pièces latérales (2, 2.1, 2.2, 2.3) et au moins une pièce de couvercle ou de base (3, 3.1, 3.2, 3.3 ; 4, 4.1) reliant les pièces latérales (2, 2.1, 2.2, 2.3) entre elles, parmi lesquelles pièces (2, 2.1, 2.2, 2.3, 3, 3.1, 3.2, 3.3, 4, 4.1) au moins une supporte sur sa face orientée vers le boîtier d'installation un corps moulé (12) réalisé en matériau intumescent, **caractérisé en ce que** le boîtier d'installation (1, 1.1) est assemblé à partir de modules (2, 2.1, 2.2, 2.3, 3, 3.1, 3.2, 3.3, 4, 4.1) unitaires et que les pièces latérales (2, 2.1, 2.2, 2.3), en tant que modules, supportent au moins un premier élément (5, 6) de connexion enfichable et qu'au moins une pièce de couvercle et/ou de base (3, 3.1, 3.2, 3.3 ; 4, 4.1), en tant qu'un ou plusieurs autres modules, supportent un second élément (6, 5) de connexion enfichable de forme complémentaire à l'au moins un élément (5, 6) de connexion enfichable de ladite pièce latérale (2, 2.1, 2.2, 2.3) concernée, lesquels éléments (6, 5) de connexion enfichable complémentaires étant disposés de telle matière sur les modules positionnés pour s'engager l'un dans l'autre, que les modules du boîtier d'installation (1, 1.1) assemblés grâce aux éléments (5, 6) de connexion enfichable dans le sens de passage d'une installation électrique, sont reliés l'un à l'autre par complémentarité de forme et qu'au moins un des modules (2, 2.1, 2.2, 2.3, 3, 3.1, 3.2, 3.3, 4, 4.1) supporte sur sa face orientée vers le boîtier d'installation (1, 1.1) au moins un corps en mousse (14) élastique afin de constituer une barrière anti-fumée.

2. Boîtier d'installation selon la revendication 1, **caractérisé en ce que** les pièces latérales (2, 2.1, 2.2, 2.3) présentent à leurs extrémités respectives un tronçon de montage (19) formant un angle rentrant par rapport à l'étendue de leur surface avec un contour pour accrocher la pièce latérale (2, 2.1, 2.2, 2.3) sur le montant latéral (23, 23.1) d'un dispositif porte-câbles (22).

3. Boîtier d'installation selon la revendication 2, **caractérisé en ce que** les pièces latérales (2, 2.1, 2.2, 2.3) présentent une ou plusieurs rainures de base (21) disposées en débord vers l'intérieur et à distance verticale par rapport au ou aux contours (20) d'accrochement, qui forment, avec le contour d'accrochement (20) un logement pour enserrer le haut ou le bas d'un montant latéral (23, 23.1) d'un dispositif porte-câbles (22).

4. Boîtier d'installation selon l'une des revendications 1 à 3, **caractérisé en ce que** les modules (2, 2.1, 2.2, 2.3, 3, 3.1, 3.2, 3.3, 4, 4.1) du boîtier d'installation (1, 1.1) présentent respectivement un bord (10), formé en repliant selon un angle le plan dudit module (2, 2.1, 2.2, 2.3, 3, 3.1, 3.2, 3.3, 4, 4.1), qui s'étend sur tout le pourtour et enserre le corps moulé (12) intumescent.

5. Boîtier d'installation selon l'une des revendications 1 à 4, **caractérisé en ce que** les éléments de connexion enfichable complémentaires sont des languettes enfichables (5) et des rainures d'enfichage (6) dont la forme est complémentaire aux précédentes.

6. Boîtier d'installation selon la revendication 5, **caractérisé en ce que** les éléments (5, 6) de connexion enfichable font partie d'un bord (10) dudit module (2, 2.1, 2.2, 2.3, 3, 3.1, 3.2, 3.3, 4, 4.1), qui s'étend dans le sens vertical.

7. Boîtier d'installation selon l'une des revendications 1 à 6, **caractérisé en ce que** chaque module (2, 2.1, 2.2, 2.3, 3, 3.1, 3.2, 3.3, 4, 4.1) supporte sur le tronçon (7, 7.1) qui le relie à un autre module (2, 2.1, 2.2, 2.3, 3, 3.1, 3.2, 3.3, 4, 4.1), deux éléments (5, 6) de connexion enfichable disposés à distance l'un par rapport à l'autre dans le sens de la conductivité de l'installation, notamment deux éléments de connexion conformés de façon complémentaire.

8. Boîtier d'installation selon l'une des revendications 1 à 7, **caractérisé en ce que** le boîtier d'installation (1, 1.1) présente deux pièces latérales (2, 2.1, 2.2, 2.3) et une pièce de couvercle et/ou de base constituée de plusieurs pièces de couvercle et/ou de base (3, 3.1 ; 4, 4.1) reliées les unes aux autres dans le sens transversal de la conductivité de l'installation au moyen des éléments de connexion enfichable.

9. Boîtier d'installation selon l'une des revendications 1 à 8, **caractérisé en ce que** le boîtier d'installation (1) présente deux pièces latérales (2, 2.1) qui sont reliées l'une à l'autre par au moins une pièce de couvercle (3, 3.1) ainsi qu'au moins une pièce de base (4, 4.1).

10. Boîtier d'installation selon l'une des revendications 1 à 9, **caractérisé en ce qu'**au moins une pièce de couvercle (3, 3.1) supporte le corps en mousse (14).

11. Boîtier d'installation selon la revendication 10, **caractérisé en ce que** le corps en mousse (14) est conformé de façon à se trouver en appui, sous une certaine précontrainte, sur la base (24) qui supporte une installation, par exemple la base d'un dispositif porte-câbles (22).

12. Boîtier d'installation selon l'une des revendications 1 à 11, **caractérisé en ce que** le boîtier d'installation est un boîtier de câbles (1,1.1) qui permet le passage de câbles électriques à travers l'ouverture d'un mur, d'un plafond ou d'une dalle.
